# EUROPÄISCHE PATENTANMELDUNG

(11) **EP 1 282 093 A1**
(43) Veröffentlichungstag der Anmeldung: **05.02.2003**
(21) Anmeldenummer: 02016727.6
(22) Anmeldetag: 26.07.2002
(51) Int. Cl.: G08B 25/08, H04M 11/04

(54) **System zur Fernüberwachung von Schächten, insbesondere von Schächten eines Fernwärmeleitungsnetzes**

(30) Priorität: 01.08.2001 DE 20112800 U
(71) Anmelder: WIKON Kommunikationstechnik GmbH, 67661 Kaiserslautern (DE)
(72) Erfinder: Müller, Ronald, 39118 Magdeburg (DE); Mrugalla, Denis, 45869 Gladbeck (DE); Krotte, Hans-Joachim, 45768 Marl (DE)
(74) Vertreter: Klein, Friedrich

(57) **Zusammenfassung**

Die Erfindung betrifft ein System zur Überwachung einer Zustandsart in Schächten, die durch entfernbare Schachtdeckel verschließbar sind, insbesondere des Wasserstandes von Schächten eines Fernwärmeleitungsnetzes, mit mindestens einem innerhalb des Schachtes angeordneten Zustandssensor, der mit einem im jeweiligen Schacht angeordneten Signalgeber verbunden ist, dessen Signal ohne Öffnen des Schachtdeckels von außerhalb des jeweiligen Schachtes her erfaßbar ist, wobei der Signalgeber des jeweiligen Schachtes mit einer nach GSM-Mobilfunkstandard arbeitenden Sendervorrichtung gekoppelt ist, die das Signal des Signalgebers als Zustandsmeldung zu einer mit einem GSM-Modul versehenen zentralen Auswertevorrichtung überträgt, mit der von einem Ort aus eine Mehrzahl besagter Schächte bezüglich der mindestens einen Zustandsart fernüberwachbar ist.

## Beschreibung

Die vorliegende Erfindung betrifft ein System zur Überwachung mindestens einer Zustandsart in Schächten, die durch entfernbare Schachtdeckel verschließbar sind, insbesondere des Wasserstandes in Schächten eines Fernwärmeleitungsnetzes, mit mindestens einem innerhalb des jeweiligen Schachtes angeordneten Zustandssenor, insbesondere einem Wasserdetektor, der mit einem im jeweiligen Schacht angeordneten Signalgeber verbunden ist, dessen Signal ohne öffnen des Schachtdeckels von außerhalb des jeweiligen Schachtes her erfaßbar ist.

Zur Minimierung der Störungen an Fernwärmeleitungen durch Außenkorrosion wird im Rahmen von Wartungsarbeiten regelmäßig eine Überwachung der Fernwärmeschächte durchgeführt. Hierzu werden die Schachtdeckel angehoben und die Schächte auf Wasseranfall kontrolliert. In Zeiten mit relativ starken Regenfällen werden diese Kontrollen intensiviert. Bei im Straßenbereich befindlichen Schachtdeckeln sind dabei die Schachteinstiege zu sichern und, falls erforderlich, der Straßenverkehr umzuleiten. Diese Art der Überwachung ist sehr aufwendig.

Aus der Gebrauchsmusterschrift DE 299 14 656 U1 ist eine Vorrichtung zur Überwachung des Wasserstandes in einem durch einen entfernbaren Deckel verschlossenen Schacht eines Fernwärmeleitungsnetzes bekannt, bei der in einer bestimmten Höhe oberhalb des Schachtbodens ein Wasserdetektor angeordnet ist. Der Wasserdetektor ist mit einem im Schacht angeordneten Signalgeber verbunden, dessen Signal ohne öffnen des Schachtdeckels von außerhalb des Schachtes her erfaßbar ist. Eine spezielle Ausgestaltung dieser bekannten Vorrichtung besteht darin, daß der Signalgeber mit einem Sender gekoppelt ist, der das Signal des Signalgebers zu einem außerhalb des Schachtes befindlichen Empfangsgerät überträgt, das eine optische und/oder akustische Anzeigeeinrichtung aufweist. Diese bekannte Vorrichtung ermöglicht eine bequeme Schachtüberwachung, wobei sogar im Bereich von Parkplätzen angeordnete Schächte problemlos überwacht werden können, ohne daß Fahrzeuge, die die Schachtdeckel verdecken, entfernt werden müssen. Das Empfangsgerät ist vorzugsweise als Handgerät ausgebildet und signalisiert dem Überwachungspersonal über die optische bzw. akustische Anzeigeeinrichtung, ob in dem zu kontrollierenden Schacht ein unzulässiger Wasserstand herrscht oder nicht.

Aufgabe der vorliegenden Erfindung ist es, ein System der eingangs genannten Art anzugeben, mit der der Personalaufwand, der mit der Überwachung von Zuständen in Schächten, insbesondere des Wasserstandes in Schächten eines Fernwärmeleitungsnetzes verbunden ist, auf ein Minimum reduziert werden kann.

Gelöst wird diese Aufgabe durch ein System mit den Merkmalen des Anspruchs 1. Das erfindungsgemäße System ist somit dadurch gekennzeichnet, daß der Signalgeber des jeweiligen Schachtes mit einer nach dem GSM-Mobilfunkstandard arbeitenden Sendervorrichtung gekoppelt ist, die das Signal des Signalgebers als Zustandsmeldung zu einer mit einem GSM-Modul versehenen zentralen Auswertevorrichtung überträgt, mit der von einem Ort aus eine Mehrzahl besagter Schächte bezüglich der mindestens einen Zustandsart fernüberwachbar ist.

Mit dem erfindungsgemäßen System lassen sich somit eine Mehrzahl von Schächten eines Fernwärmeleitungsnetzes von einem zentralen Ort aus gleichzeitig überwachen, was eine erhebliche Verringerung des Überwachungsaufwandes und der damit verbundenen Kosten ermöglicht.

Eine bevorzugte Ausgestaltung des erfindungsgemäßen Systems besteht darin, daß die jeweilige Sendervorrichtung batteriebetrieben ist und alle elektronischen Bauelemente der Sendervorrichtung einschließlich Batterien in einem gegen das Eindringen von Wasser schützenden Gehäuse untergebracht sind, wobei die Sendervorrichtung vorzugsweise in einem Schmutzfänger unterhalb des jeweiligen Schachtdeckels befestigt ist. Hierdurch wird eine gute Zugänglichkeit der Sendervorrichtung für Wartungs- und Servicearbeiten, insbesondere das Austauschen von Batterien, sowie eine zufriedenstellende Funkübertragung sichergestellt.

Eine weitere bevorzugte Ausgestaltung des Systems besteht darin, das die jeweilige Sendervorrichtung ein Dual-Band-Funkmodul aufweist. Das erfindungsgemäße System funktioniert somit in zwei unterschiedlichen GSM-Frequenzbändern bzw. Telefonsystemen. Hierdurch wird die Zuverlässigkeit und der mögliche Einsatzbereich des erfindungsgemäßen Systems verbessert.

Eine weitere bevorzugte Ausgestaltung des erfindungsgemäßen Systems besteht darin, daß der jeweilige zu überwachende Schacht sowohl mit einem Sensor zur Erfassung des Wasserstandes als auch mit einem Temperatursensor im Schacht ausgestattet ist. Anhand der erfaßten Temperatur lassen sich Rückschlüsse ziehen, ob eine an dem betreffenden Schacht verlaufende Fernwärmeleitung eventuell eine Leckagestelle aufweist.

Weitere bevorzugte und vorteilhafte Ausgestaltungen des erfindungsgemäßen Systems sind in den Unteransprüchen angegeben.

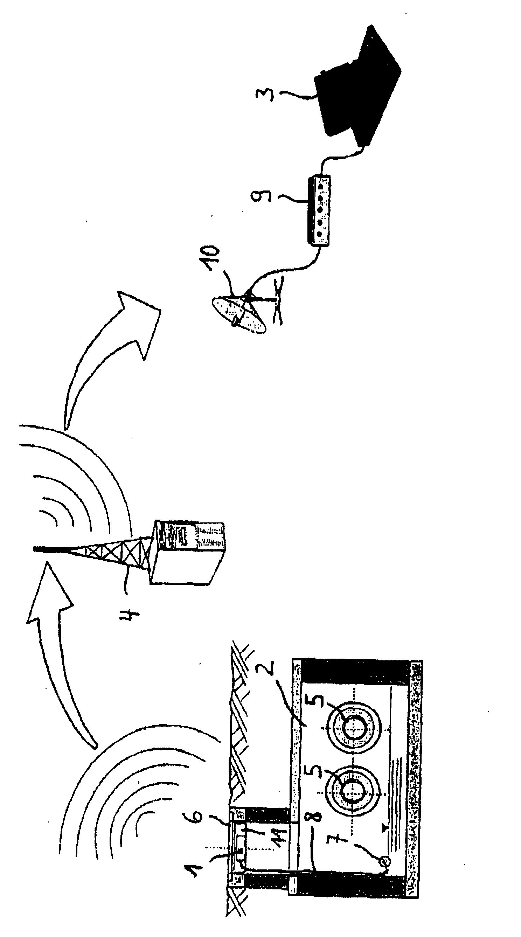

Nachfolgend wird die Erfindung anhand eines Ausführungsbeispiels mit Bezug auf die beiliegende Zeichnung näher erläutert. Die einzige Figur zeigt in schematischer Darstellung einen mit einer Sendervorrichtung 1 ausgestatteten Fernwärmeschacht 2 und eine an einem weit entfernten Ort angeordnete zentrale Auswertevorrichtung 3, wobei die im Fernwärmeschacht 2 angeordnete Sendervorrichtung 1 und die zentrale Auswertevorrichtung 3 über eine Antennenanlage 4 eines Mobilfunketzbetreibers miteinander kommunizieren.

Der Fernwärmeschacht 2, der Zugang zu den mit einer Wärmeisolierung versehenen Fernwärmerohrleitungen 5 bietet, weist an seiner Oberseite einen abhebbaren Schachtdeckel 6 auf. In einem bestimmten Abstand zum Schachtboden ist ein Wasserdetektor 7 angeordnet, der einen Sensor aufweist, welcher das Ansteigen eines Wasserspiegels über ein kritisches Niveau hinaus erfaßt, beispielsweise durch eine elektrische Widerstandsmessung oder eine Schwimmerschaltung. Die Montagehöhe des Wasserdetektors 7 ist so gewählt, daß der Wasserspiegel vor Erreichen der Fernwärmerohrleitungen 5 bzw. deren Isolierungen erfaßt wird. Erreicht der Wasserspiegel den Wasserdetektor 7, so gibt dessen Sensor ein Signal ab, das über eine elektrische Leitung 8 zu einem unterhalb des Schachtdeckels 6 angeordneten Signalgeber geleitet wird. Der Signalgeber ist mit der nach dem GSM-Mobilfunkstandard arbeitenden Sender-Vorrichtung 1 gekoppelt, die das Signal des Signalgebers als Zustandsmeldung zu der zentralen Auswertevorrichtung 3 überträgt, die mit einem GSM-Modul 9 und einer Antenne 10 ausgestattet ist. Die zentrale Auswertevorrichtung 3 besteht im gezeigten Ausführungsbeispiel aus einem Personal-Computer. Anstelle eines Personal-Computers kann auch ein Notebook verwendet werden.

In dem Fernwärmeschacht 2 ist außer dem Wasserstandsdetektor 7 auch ein mit der Sendervorrichtung verbundener Temperatursensor (nicht gezeigt) angeordnet. Dar Wasseratandsdetektor 7, der Temparatursensor sowie die Sendervorrichtung 1 sind batteriebetrieben, wobei Batterien verwendet werden, die einen Betrieb von mindestens drei Jahren garantieren. Alle Anlagenteile sind für eine Betriebstemperatur von -10°C bis +60°C ausgelegt. Der mit dem Wasserstandsdetektor 7 verbundene Signalgeber sowie ein dem Temperatursensor zugeordneter Signalgeber sind zusammen mit der Sendervorrichtung 1 einschließlich einer Antenne und den Batterien in einem wassergeschützten Gehäuse untergebracht, das in einem Schmutzfänger 11 unterhalb des Schachtdeckels 6 befestigt ist.

Die nach dem GSM-Mobilfunkstandard arbeitende Sendervorrichtung 1 weist ein Dual-Band-Funkmodul auf, so daß die Daten betreffend den Wasserstand und/oder die Schachttemperatur sowohl im D-Netz als auch im E-Netz übertragen werden können. Außer diesen Daten werden von der Sendervorrichtung vorzugsweise auch das aktuelle Datum, die Uhrzeit, der Ort des betreffenden Schachtes 2, eine Schacht-Nummer, der Ladezustand der Batterien, die Stärke eines von der Sendervorrichtung 1 übertragenen Signals und Servicemeldungen an die zentrale Auswertevorrichtung 3 übertragen. Bei Bedarf kann der Umfang der Meldungen noch erweitert werden.

Beim Eindringen von Wasser in einen derart ausgerüsteten Schacht erfolgt bei Überschreitung eines bestimmten, vorgebbaren Wasserpegels sofort eine Alarmmeldung an die zentrale Auswertevorrichtung 3, so daß sofort zielgerichtet Gegenmaßnahmen zum Abpumpen bzw. Absaugen des Wassers aus dem bzw. den betroffenen Schächten 2 ergriffen werden können. Überflüssige Kontroll- und Suchfahrten entfallen. Mit der zentralen Auswertevorrichtung 3 können eine Vielzahl weit voneinander entfernter Schächte 2 gleichzeitig kontrolliert und weitestgehend von Wasser freigehalten werden, wodurch die Korrosionsgefahr für die Fernwärmeleitungen 5 erheblich gemindert wird.

## Patentansprüche

1. System zur Überwachung mindestens einer Zustandsart in Schächten, die durch entfernbare Schachtdeckel verschließbar sind, insbesondere des Wasserstandes in Schächten (2) eines Fernwärmeleitungsnetzes, mit mindestens einem innerhalb des jeweiligen Schachtes angeordneten Zustandssensor (7), insbesondere einem Wasserdetektor, der mit einem im jeweiligen Schacht angeordneten Signalgeber verbunden ist, dessen Signal ohne öffnen des Schachtdeckels (6) von außerhalb des jeweiligen Schachtes her erfaßbar ist,
**dadurch gekennzeichnet, daß** der Signalgeber des jeweiligen Schachtes mit einer nach dem GSM-Mobilfunkstandard arbeitenden Sendervorrichtung (1) gekoppelt ist, die das Signal des Signalgebers als Zustandsmeldung zu einer mit einem GSM-Modul (9) versehenen zentralen Auswertevorrichtung (3) überträgt, mit der von einem Ort aus eine Mehrzahl besagter Schächte (2) bezüglich der mindestens einen Zustandsart fernüberwachbar ist.

2. System nach Anspruch 1,
**dadurch gekennzeichnet, daß** die jeweilige Sendervorrichtung (1) batteriebetrieben ist und alle elektronischen Bauelemente der Sendervorrichtung einschließlich Batterien in einem gegen das Eindringen von Wasser schützenden Gehäuse untergebracht sind.

3. System nach Anspruch 1 oder 2,
**dadurch gekennzeichnet, daß** die jeweilige Sendervorrichtung in einem Schmutzfänger (11) unterhalb des jeweiligen Schachtdeckels (6) befestigt ist.

4. System nach einem der Ansprüche 1 bis 3,
**dadurch gekennzeichnet, daß** die jeweilige Sendervorrichtung (1) ein Dual-Band-Funkmodul aufweist.

5. System nach einem der Ansprüche 1 bis 4,
**dadurch gekennzeichnet, daß** die zentrale Auswertevorrichtung (3) aus einem Personal-Computer mit einem GSM-Modul (9) und einer Antenne (10) oder aus einem Notebook mit einem GSM-Modul und einer Antenne besteht.

6. System nach einem der Ansprüche 1 bis 5,
**dadurch gekennzeichnet, daß** der jeweilige Schacht (2) mit einem Sensor (7) zur Erfassung des Wasserstandes im Schacht (2) und/oder mit einem Temperatursensor ausgestattet ist.

7. System nach einem der Ansprüche 1 bis 6,
**dadurch gekennzeichnet, daß** die jeweilige Sendervorrichtung das Datum, die Uhrzeit, den Ort des zugeordneten Schachtes (2), eine Schacht-Nummer, den Wasserstand im Schacht, die Temperatur im Schacht, den Ladezustand von der Sendervorrichtung (1) zugeordneten Batterien, die Stärke eines von der Sendervorrichtung übertragenen Signals und/oder eine Servicemeldung an die zentrale Auswertevorrichtung überträgt.

8. System nach einem der Ansprüche 1 bis 7,
**dadurch gekennzeichnet, daß** die jeweilige Sendervorrichtung (1) bei Erfassung eines bestimmten Zustandes im zugehörigen Schacht (2) durch den jeweiligen Zustandssensor (7) eine Alarmmeldung an die zentrale Auswertevorrichtung (3) überträgt und diese Alarmmeldung nach einer programmierbaren Zeit wiederholt überträgt, bis eine Quittierung erfolgt.
